# EUROPEAN PATENT SPECIFICATION

(11) **EP 2 554 715 B1**
(45) Date of publication and mention of the grant of the patent: **31.10.2018**
(21) Application number: 11762246.4
(22) Date of filing: 29.03.2011
(51) Int. Cl.: C25C 3/08, C01B 32/20, C01B 32/90, C01B 32/921, C04B 35/52

(54) **CATHODE CARBON BLOCK FOR ALUMINUM SMELTING AND PROCESS FOR PRODUCTION THEREOF**
KATHODENKOHLENSTOFFBLOCK ZUR ALUMINIUMSCHMELZUNG UND HERSTELLUNGSVERFAHREN DAFÜR
BLOC DE CARBONE CATHODIQUE À DES FINS DE FUSION D'ALUMINIUM ET SON PROCÉDÉ DE PRODUCTION

(30) Priority: 30.03.2010 JP 2010078759
(43) Date of publication of application: 06.02.2013
(73) Proprietor: Nippon Electrode Co., Ltd., Shizuoka 421-3203 (JP)
(72) Inventor: TODA, Shinjiro, Shizuoka-shi Shizuoka 421-3203 (JP); ISHIKAWA, Akifumi, Shizuoka-shi Shizuoka 421-3203 (JP)
(74) Representative: Eisenführ Speiser
(86) International application number: PCT/JP2011/001861
(87) International publication number: WO 2011/121998

(56) References cited:
- EP-A1- 1 564 313
- WO-A1-83/00347
- JP-A- 59 501 671
- JP-A- 61 501 456
- US-A- 3 400 061
- US-A- 3 400 061
- US-A- 3 661 736
- US-A- 3 676 371
- US-A- 4 544 524
- US-A- 5 409 589
- US-A- 5 492 604

## Description

### TECHNICAL FIELD

The present invention relates to a process for producing a cathode carbon block used as a cathode for a reduction cell for aluminum smelting, involving the use of a mixture of carbon raw material particles and titanium carbide particles and a cathode carbon block obtained by the process.

### BACKGROUND ART

Carbon block (cathode carbon block) is used as a cathode for a reduction cell for aluminum smelting (aluminum reduction cell). This cathode carbon block is an important lining material that constitutes the bottom of the aluminum reduction cell, but also has a role as a cathode. Electric power supplied through the cathode supplies electrons to an electrolytic bath in the aluminum reduction cell for reducing aluminum ions to metal aluminum.

Conventional processes for producing cathode carbon block includes a method of adding an organic binder to a particle size controlled mixture of a carbonaceous raw material consisting of calcined anthracite or artificial graphite or a mixture thereof, kneading, forming , and baking in a non-oxidative atmosphere at about 1000°C. However, in this method, there was a problem that cracks and damage deterioration were caused in the cathode carbon block during operation of the aluminum reduction cell by for example thermal stress or swelling due to Na intercalation, and these resulted in shutdown of the aluminum reduction cell.

Accordingly, in order to solve such a problem, a method is known wherein an organic binder is added to a particle size controlled mixture of calcined coke, kneaded, formed , baked in a non-oxidative atmosphere, and then graphitized at a temperature of 2000°C or higher to obtain a cathode carbon block (see e.g. Patent Document 1). The cathode carbon block obtained in this method shows e.g. superior resistance against thermal stress or Na intercalation, and thus shutdown of the aluminum reduction cell due to cracks and damage deterioration caused in the cathode carbon block is prevented. Since this graphitized cathode carbon block has low electrical resistivity thereby allowing high current operation, use of this cathode carbon block has become the mainstream for recent large-scale aluminum reduction cell.

This graphitized cathode carbon block is a material having superior property. However, in recent years, energy conservation in aluminum production is demanded due to further upsizing trend for aluminum reduction cell or increase in consciousness for global warming countermeasures in the background. Therefore, a cathode carbon block having even lower electrical resistivity and higher thermal conductivity is desired.

On the other hand, cathode carbon block is also an important lining material that constitutes the bottom of the aluminum reduction cell, though it is subject to physical and electrochemical erosion by an electrolytic bath during operation and thus consumed. The electrochemical erosion, which is one cause of the consumption, is a phenomenon which progresses by the production and dissolution of Al₄C₃. Since this reaction is a chemical reaction between carbon and aluminum, it cannot be avoided as long as carbon block is used as the cathode for aluminum reduction cell.

As a cathode for aluminum smelting, a method of adding TiB₂ in an amount of 10% by weight relative to TiC in a mixture of TiC and TiB₂ as a material that shows superior electric conductivity and low solubility against aluminum melt has long been known (see e.g. Patent Document 2). In this Patent Document 2, it is disclosed that the solubility against aluminum melt at 970°C is reduced to about 1/3, and considering the balance between cost and performance (service life) as a cathode material, a mixture of 75 to 95% of TiC and 5 to 25% of TiB₂ is suitable.

A method is also known wherein refractory hard substances as stated above (borides and carbides such as TiB₂ and TiC) are mixed into the cathode carbon block in order to improve the wettability between the cathode carbon block and aluminum melt, as well as to prevent electrochemical erosion by the aluminum electrolytic bath (see e.g. Patent Document 3). In this Patent Document 3, a structure of aluminum reduction cell is proposed where the cathode electrode is slanted using a cathode carbon block containing refractory hard substances, and a so-called drain cathode is disclosed where the aluminum melt deposited on top of the cathode electrode is recovered to a drain installed at the bottom of the aluminum reduction cell .

As described above, TiB₂ which has particularly superior electric conductivity and extremely low solubility in metal or electrolytic bath has played a major role in the research and development of non-consumable electrodes. However, a large factor in preventing the practical application of non-consumable electrodes was that the raw material, TiB₂ powder, is expensive as well as requires high purity in order to keep the content of impurities such as oxygen low.

Accordingly, in recent years, technologies are being developed for example to coat TiB₂ on the surface of cathode carbon block in order to reduce the amount of TiB₂ used, as well to make a cathode carbon block with improved wettability with metal (see e.g. Patent Document 4).
Patent Document 1
   Japanese Patent Application Publication Number S52(1977)-119615
Patent Document 2
   U.S. Patent No. 3, 028, 324
Patent Document 3
   U.S. Patent No. 3,400,061
Patent Document 4
   Japanese Translation of PCT International Application Publication No. 2001-518978

However, in the invention of Patent Document 4, since the TiB₂ coating layer has a different thermal expansion coefficient from cathode carbon block, and also has inferior thermal shock resistance, there are disadvantages such as cracks caused at the interface with the cathode carbon block, or being more easily peeled from the cathode carbon block. In such a technology to place a coating layer on the surface of cathode carbon block, its effect is limited to portions or time periods where/when the coating layer is in good state, and sufficient, persistent effect cannot be obtained. A step of e.g. plasma spray coating is also necessary for coating, which leaves problems in the economical viewpoint such as introduction in a commercial scale and practical application. Thus, the emergence of a practical cathode carbon block that can prevent electrochemical erosion while ensuring a long-term wettability with aluminum melt has been desired.

The present invention solves the above problems, the object of which is to provide a cathode carbon block for aluminum smelting having low electrical resistivity and high thermal conductivity to improve the energy efficiency in an aluminum reduction cell and a process for production thereof. It is a further object to provide a cathode carbon block for aluminum smelting having improved wettability with aluminum melt and reduced the rate of electrochemical erosion by an electrolytic bath to enable accomplishment of prolonged service life, as well as a process for production thereof.

### SUMMARY OF THE INVENTION

In order to achieve the aforementioned objectives, the present invention provides a process for producing a cathode carbon block for aluminium smelting according to claim 1, a cathode carbon block according to claim 4 and the use of a mixture according to claim 7.

According to the present invention, a cathode carbon block for aluminum smelting having the properties of low electrical resistivity and high thermal conductivity as well as a process for production thereof can be provided, and the energy efficiency in aluminum production can be improved. Moreover, with a cathode carbon block for aluminum smelting having easy wettability to aluminum melt and a process for production thereof, the current efficiency of aluminum smelting is improved and the service life of aluminum reduction cell can be extended.

### Brief Description of the Drawings

Figure 1 is a schematic diagram of a small-scale experimental device for an erosion test;
Figure 2 is a graph showing the relationship between the proportion of titanium carbide in a mixture of carbon raw material and titanium carbide in a raw material composition having a particle size of 1 mm or less and the erosion rate; and
Figure 3 is a graph showing the relationship between the process temperature and the electrical resistivity when the titanium carbide content in the cathode carbon block is 0% and 15%.

### DESCRIPTION OF EMBODIMENTS

### [1. Production Step]

The process for producing a cathode carbon block of the present embodiment comprises the following steps:
(1) a mixing step of mixing a carbon raw material with titanium carbide;
(2) a kneading/forming step of kneading the mixture after the mixing step and an organic binder, and forming the kneaded product;
(3) a baking step of baking the formed product in a non-oxidative atmosphere; and
(4) a graphitization step of graphitizing the baked product after being baked in the baking step.

Each step will now be specifically described.

### (1) Mixing step

In the mixing step, materials are mixed at a mixing proportion of 64 to 97% of the carbon raw material to 3 to 36% of titanium carbide. The proportion of titanium carbide is 5 to 100% in the raw material composition having a particle size of 1 mm or less.

### [Carbon raw material]

For the carbon raw material, crashed and particle size controlled calcined coke, graphite, or a mixture thereof is used. One or more of calcined petroleum coke, calcined coal-tar pitch coke etc. can be used alone or mixed together as this calcined coke. In addition, natural graphite, artificial graphite etc, can be used as the graphite.

### [Titanium carbide]

Titanium carbide may comprise, in addition to TiC, trace amounts of titanium carbonitride or titanium oxide, carbon, etc. These substances are secondary products from the production process due to the cell atmosphere or temperature or unreacted residues from the production of titanium carbide. Accordingly, in the invention of the present application, titanium carbide means a powder or aggregated substance consisting substantially of TiC, but also comprises unavoidable impurities such as titanium carbonitride or titanium oxide, carbon, etc.

### [Average particle size of titanium carbide (1 mm or less)]

In the graphitization of cathode carbon block, titanium carbide has the effects of acting as a catalyst to promote the graphitization of carbon raw material, as well as improving the wettability between the cathode carbon block and aluminum melt in the aluminum reduction cell, and reducing the erosion rate of the cathode carbon block to extend the service life of the aluminum reduction cell. Naturally, for titanium carbide having an average particle size greater than 1 mm, the effect of action as a catalyst is reduced in the graphitization of cathode carbon block production, and the effect of reducing the erosion rate of cathode carbon block in the aluminum reduction cell will be reduced. It is not economical to attempt to gain the effect of reducing the erosion rate with titanium carbide greater than 1 mm, because more titanium carbide than necessary will be required. Accordingly, a smaller average particle size of titanium carbide is preferred. However, when the average particle size of the titanium carbide is less than 1 µm, the funding cost of titanium carbide will be too high and not economical. Accordingly, the preferred average particle size of titanium carbide is in the range of 1 µm to 1 mm. A further preferred average particle size of titanium carbide is in the range of 7 µm to 50 µm. The average particle size herein means D50.

### [Amount of titanium carbide added (3 to 36% by mass): effect of promoting graphitization]

By adding 3 to 36% by mass of titanium carbide to the cathode carbon block, the graphitization of carbon is promoted by the catalytic effect of titanium carbide upon graphitization, and a cathode carbon block having low electrical resistivity can be produced. Moreover, by adding titanium carbide, graphitization temperature can be lowered, the cost necessary for graphitization can be reduced, and productivity is improved. If greater than 36% by mass of titanium carbide is contained, it becomes difficult to gain a further catalytic effect, and also the mixing proportion of the carbon material is reduced, and thus the thermal/mechanical property of the cathode carbon block may be deteriorated. Accordingly, the mixing proportion of titanium carbide in the cathode carbon block in the invention of the present application is preferably 3 to 36% by mass. Further by also considering the economic efficiency such as the cost of raw material, the preferred mixing proportion of titanium carbide is 3 to 10% by mass, and a further preferred mixing proportion of titanium carbide is 3 to 5% by mass.

### [Amount of titanium carbide added (3 to 36% by mass): effect of reducing the erosion rate]

By adding 3 to 36% by mass of titanium carbide to the cathode carbon block, the wettability between the cathode carbon block and aluminum melt is improved upon aluminum smelting. In order to attempt improvement of wettability and realize longer life, it is desirable to add titanium carbide at 10% or more by mass relative to the cathode carbon. If greater than 36% by mass of titanium carbide is added, it becomes difficult to gain a further effect of reducing the erosion rate, and also the mixing proportion of the carbon material is reduced, and thus the thermal/mechanical property of the cathode carbon block may be deteriorated. Accordingly, the mixing proportion of titanium carbide in the cathode carbon block in the invention of the present application, from the viewpoint of the effect of reducing the erosion rate, is also preferably in the range of 3 to 36% by mass. Further by considering the substantial service life extension of the cathode carbon block, the preferred mixing proportion of titanium carbide is 10 to 30% by mass.

### [Particle size control: proportion of titanium carbide in a mixture of carbon raw material and titanium carbide in raw material composition having a particle size of 1 mm or less (5 to 100% by mass)]

In a raw material composition having a particle size of 1 mm or less, it is desirable that the particle size is controlled so that the proportion of titanium carbide in the mixture of carbon raw material and titanium carbide is 5 to 100% by mass. Titanium carbide having relatively fine particles (particle size 0.001 to 0.030 mm), along with the carbon raw material having a particle size of 1 mm or less, surrounds the carbon raw material particles greater than 1 mm in the cathode carbon block and constitutes a microstructure. By adjusting the mixing proportion of titanium carbide in this microstructure to be 5 to 100% by mass, it became possible to improve the wettability with aluminum melt. Titanium carbide having fine particles is a major raw material constituting this microstructure.

If the proportion of titanium carbide in the mixture of carbon raw material and titanium carbide having a particle size of 1 mm or less is less than 5% by mass, the wettability of the microstructure itself with aluminum melt will not be improved. Accordingly, in the invention of the present application, it is desirable that the particle size is controlled so that the proportion of titanium carbide in the mixture of carbon raw material and titanium carbide in the raw material composition having a particle size of 1 mm or less is 5 to 100% by mass. Further by considering the substantial service life extension of the cathode carbon block, it is further preferred that the particle size is controlled so that the proportion of titanium carbide in the mixture of carbon raw material and titanium carbide in the raw material composition having a particle size of 1 mm or less is 20 to 55% by mass.

### (2) Kneading/forming step

In the kneading step, an organic binder is added to the mixture after the mixing step and kneaded. One or more of coal-tar pitch, coal-tar, or resin etc. which are typically used for the production of carbon material can be used alone or mixed together as this organic binder. The kneading method is not particularly limited, and for example a kneader is used typically at a temperature of 120 to 150°C. The forming method is not particularly limited, and extrusion molding or press molding or vibration molding can be employed. The size and shape of the formed product may be determined according to the format of the aluminum reduction cell used.

In order to obtain a good formed product, the binder must blend well with the carbon raw material, allow uniform packing, and enable forming at an appropriate pressure. A function as an adhesive is also demanded of the binder because the formed product before baking will require a certain amount of strength. If the amount of this binder is too small, adhesion or packing upon forming will be insufficient, and if the amount is too large, deformation will occur upon baking and space within the microstructure will also increase. The optimal amount of organic binder used will be determined depending on the nature of the raw material and the binder, and typically, proportion to the above mixture is suitably in the range of 10 to 30% by weight.

### (3) Baking step

In the baking step, the formed product after the kneading/forming step is baked in a non-oxidative atmosphere. The baking step is to carbonize the binder and to unite it with the carbon raw material, and a temperature of up to 800 to 1300°C will allow sufficient carbonization. Accordingly, baking may be under a non-oxidative atmosphere at a temperature of 800 to 1300°C, wherein the non-oxidative atmosphere may be carried out in a coke breeze, in a vacuum chamber, or in an inert atmosphere such as N₂ or Ar.

### (4) Graphitization step

In the graphitization step, the baked product is graphitized. Graphitization is carried out in a graphitization furnace at a temperature of 2400 to 3000°C. The graphitization furnace is not particularly limited, and representative furnaces include indirect current type (Acheson furnace) and direct current type (LWG furnace).

### [Graphitization temperature (2400 to 3000°C)]

A graphitization temperature of 2400°C or higher is necessary in order to enable the graphitization of calcined coke which is the raw material and produce a cathode carbon block having low electrical resistivity and high thermal conductivity. This is a thermodynamic demand accompanying phase transformation. At a graphitization temperature of lower than 2400°C, graphitization will not proceed and a cathode carbon block having low electrical resistivity and high thermal conductivity cannot be obtained. At a graphitization temperature of higher than 3000°C, more than necessary caloric or electric energy will be added, and the aging of the graphitization furnace will proceed which may lead to increased cost. Accordingly, the preferred graphitization temperature is in the range of 2400 to 3000°C. A more preferred graphitization temperature is in the range of 2600 to 3000°C, and a further preferred graphitization temperature is in the range of 2800 to 3000°C.

### [Thermal conductivity (115 W/ (m·K) or higher)]

The thermal conductivity of the cathode carbon block produced by the production process as described above is preferably 115 W/(m·K) or higher. More preferably, the thermal conductivity is 120 W/(m·K) or higher. Further preferably, the thermal conductivity is 130 W/(m·K) or higher.

### [Value of electrical resistivity (11 µΩm or less)]

The value of electrical resistivity of the cathode carbon block is preferably 11 µΩm or less. More preferably, the value of electrical resistivity is 10 µΩm or less, and further preferably the value of electrical resistivity is 9 µΩm or less.

### [2. Effect of action of carbon block]

In the carbon block produced by the production procedure described above, titanium carbide acts as a catalyst during the graphitization of the carbon material. By employing the carbon material as the main raw material and allowing a cathode carbon block comprising titanium carbide having an appropriate particle size added as a catalyst, the graphitization of the carbon material during graphitization at a high temperature can be promoted. A cathode carbon block having low electrical resistivity and high thermal conductivity is thereby provided, the energy efficiency of the aluminum reduction cell operation is increased, and the thermal balance of the aluminum reduction cell is appropriately retained. In other words, by employing this carbon material as the main raw material and adding titanium carbide, it became possible to obtain a cathode carbon block having low electrical resistivity and high thermal conductivity even when the graphitization temperature is relatively low.

Further, in the carbon block produced by the above production procedure, titanium carbide that is easily wettable to aluminum melt is contained in the cathode carbon block so that the cathode carbon block surface is easily covered by the aluminum melt. The erosion rate is thereby reduced in the aluminum reduction cell. Since this rate of electrochemical erosion depends on the rate of production and dissolution of Al₄C₃, if the rate of Al₄C₃ dissolution can be reduced, the erosion rate can be reduced. In other words, since the solubility of Al₄C₃ to aluminum melt is far smaller than the solubility to the electrolytic bath, if Al₄C₃ produced on the cathode carbon block surface is in contact with the aluminum melt, the rate of dissolution thereof will be low, and if it is in contact with the electrolytic bath, the rate of dissolution will be high.

In the actual aluminum reduction cell, since the cathode carbon block has higher wettability to the electrolytic bath than the aluminum melt, the electrolytic bath often exists on the surface of the cathode carbon block. In other words, Al₄C₃ produced in the actual cell is exposed to a state of high dissolution rate. Except for the disadvantage of high electrochemical erosion rate, the carbon material is a raw material that is superior in thermal/electrical/mechanical property, chemically stable, and easily utilized as a resource. By employing this carbon material as the main raw material and adding titanium carbide, the characteristics of the carbon material can be maintained while reducing the erosion rate of the cathode carbon block during operation of the aluminum reduction cell. According to the present invention, although consumption of the cathode carbon block by erosion cannot be reduced to zero, the effect of reducing the erosion rate can be sustained because titanium carbide is dispersed in the entire cathode carbon block.

### EXAMPLES

The present invention will now be further described in detail by Examples, but the present invention is not limited to the following Examples as long as it does not surpass its scope. Evaluation methods for comparison of each property are shown below.

### [Evaluation methods]

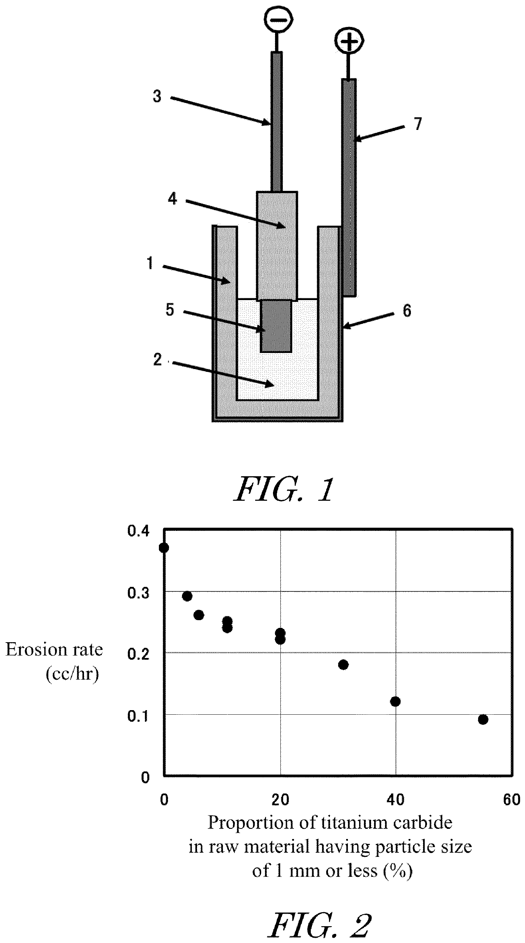

(1) Electrical resistivity of cathode carbon block: in compliance with JIS R 7202-1979 "Kelvin double bridge method".
(2) Thermal conductivity of cathode carbon block: in compliance with Japan Carbon Association standard JCAS-19 "Kohlrausch method".
(3) Erosion rate of cathode carbon block:
   A test method for evaluating the change in sample volume after actually carrying out molten salt electrolysis in a small-scale experimental device was employed for the erosion rate. Figure 1 is a device for performing an evaluation test of the erosion rate of the cathode carbon block. Symbol 1 is a graphite crucible with molten electrolytic bath 2 placed inside, and a test strip 5 connected to a conductive rod 3 on the cathode side via an adapter 4 is dipped in the molted electrolytic bath 2 in the graphite crucible 1. The graphite crucible 1 is supported by an outer wall 6 made of stainless steel, and a conductive rod 7 on the anode is connected to the outer wall 6.

In the test for evaluating the change in sample volume, electrolysis was carried out at current of 80 A using the test strip 5 as the cathode and the graphite crucible 3 as the anode. Electrolysis was carried out for 48 hours, and then the sample was taken out and cooled. The erosion rate was determined from the change in sample volume before and after electrolysis. This test method is different from a typical aluminum reduction cell in that the cathode is hanged in the electrolytic bath so that the sample is very easily contacted with the electrolytic bath and exposed to a very severe condition as a cathode carbon block, thereby the erosion rate will be faster than that used in the actual aluminum reduction cell.

### [Comparison of first property (comparison of amount of titanium carbide added)]

### [Examples 1 to 7 and Comparative Examples 1 to 3]

In Examples 1 to 7 and Comparative Examples 1 to 3 for comparison of the first property, the amount of titanium carbide added to be mixed with the carbon raw material was varied to produce cathode carbon blocks, and the property of carbon blocks having different titanium carbide contents was compared. Calcined pitch coke and artificial graphite were mixed and used as the carbon raw material used in this comparison of property.

In Examples 1 to 7 and Comparative Examples 1 to 3, coal-tar pitch at an amount of outer percentage of 19% relative to the total of the carbon raw material and titanium carbide was added as the organic binder according to the formulation shown in Table 1, kneaded, press molded at a molding pressure of 20 MPa to obtain a molded product of about 110 × 65 × 230 mm. This molded product was further embedded in coke breeze, baked under a non-oxidative atmosphere at a temperature of 1000°C, and graphitized at 2800°C in an indirect current type graphitization furnace (Acheson furnace). The results of the electrical resistivity, the thermal conductivity, and erosion test for the cathode carbon block obtained are also shown in Table 1.

**[Table 1]**

| | | Example | | | | | | | Comparative Example | | |
|---|---|---|---|---|---|---|---|---|---|---|---|
| | | 1 | 2 | 3 | 4 | 5 | 6 | 7 | 1 | 2 | 3 |
| Carbon raw materia (% by mass) | Greater than 1 mm | 51 | 51 | 51 | 51 | 51 | 45 | 45 | 51 | 51 | 39 |
| | 1 mm or less | 46 | 44 | 39 | 34 | 29 | 49 | 43 | 49 | 47 | 55 |
| TiC | 7 µm | 3 | 5 | 10 | 15 | 20 | - | - | - | 2 | - |
| | 105 µm to 1 mm | - | - | - | - | - | 6 | 12 | - | - | - |
| | 1 to 3 mm | - | - | - | - | - | - | - | - | - | 6 |
| (Raw material subtotal) | | 100 | 100 | 100 | 100 | 100 | 100 | 100 | 100 | 100 | 100 |
| Proportion of titanium carbide in raw material having particle size of 1 mm or less (% by mass) | | 6 | 10 | 20 | 31 | 41 | 11 | 22 | 0 | 4 | 0 |
| Electric resistivity (µΩm) | | 10 | 10 | 9 | 7 | 7 | 9 | 7 | 12 | 13 | 10 |
| Thermal conductivity (W/(m×K)) | | 130 | 131 | 141 | 138 | 140 | 117 | 145 | 105 | 110 | 93 |
| Erosion rate (cc/hr) | | 0.26 | 0.27 | 0.22 | 0.18 | 0.19 | 0.24 | 0.26 | 0.37 | 0.29 | 0.29 |

As apparent from Table 1, the electrical resistivity and thermal conductivity in Comparative Example 1 which does not contain titanium carbide and Comparative Example 2 having a titanium carbide content of 2% are similar. In contrast, in Examples 1 to 7, the electrical resistivity is lower and thermal conductivity is higher with increasing titanium carbide content, rendering superior electrical/thermal property.

In Examples 1 to 7, the erosion rate is also decreased with increased titanium carbide content (the mixing proportion of titanium carbide in the raw material composition having a particle size of 1 mm or less), showing superior erosion resistance. The erosion rate is also sufficiently reduced in Example 11 having a titanium carbide content of 36% (the mixing proportion of titanium carbide in the raw material composition having a particle size of 1 mm or less is 55%) in the comparison of the second property described below.

In contrast, the reduction of the electrical resistivity and increase in the thermal conductivity are insufficient, and the erosion rate is also not sufficiently reduced in Comparative Example 2 having a titanium carbide content of 2% (the mixing proportion of titanium carbide in the raw material composition having a particle size of 1 mm or less is 4%). In Comparative Example 3, the erosion rate is not sufficiently reduced because the particle size of the titanium carbide used is 1 mm or more.

Consequently, by adding titanium carbide at 3 to 36% by mass to the carbon raw material, a cathode carbon block having reduced erosion rate and superior erosion resistance as well as a process for production thereof can be provided.

### [Comparison of second property (comparison of mixing proportion of titanium carbide in the raw material composition having a particle size of 1 mm or less)]

### [Examples 8 to 11 and Comparative Example 4]

In Examples 8 to 11 and Comparative Example 4 for comparison of the second property, the mixing proportion of titanium carbide in the raw material composition having a particle size of 1 mm or less was varied to produce cathode carbon blocks, and the property of cathode carbon block having different mixing proportions was compared. Calcined petroleum coke and artificial graphite were used in Example 8 and Comparative Example 4, and calcined pitch coke and artificial graphite were used in Examples 9 to 11 as the carbon raw material used in this comparison of property.

In Examples 8 to 11 and Comparative Example 4 for comparison of the second property, coal-tar pitch at an amount of outer percentage of 17 to 20% relative to the total of the carbon raw material and titanium carbide was added as the organic binder according to the formulation shown in Table 2, kneaded, and extrusion-molded so as to obtain a molded product of about 700 × 600 × 3600 mm. This molded product was further baked in a non-oxidative atmosphere at a temperature of 1250°C in a Riedhammer type continuous baking furnace, graphitized at 2800°C in an indirect current type graphitization furnace (Acheson furnace), and the result of erosion test for the cathode carbon block obtained is also shown in Table 2.

**[Table 2]**

| | | Example | | | | Comparative Example |
|---|---|---|---|---|---|---|
| | | 8 | 9 | 10 | 11 | 4 |
| Carbon raw materia (% by mass) | Greater than 1 mm | 45 | 40 | 40 | 35 | 45 |
| | 1 mm or less | 49 | 48 | 36 | 29 | 55 |
| TiC | 7 µm | 6 | 12 | 24 | 36 | - |
| (Raw material subtotal) | | 100 | 100 | 100 | 100 | 100 |
| Proportion of titanium carbide in raw material having particle size of 1 mm or less (% by mass) | | 11 | 20 | 40 | 55 | 0 |
| Erosion rate (cc/hr) | | 0.25 | 0.23 | 0.12 | 0.09 | 0.37 |

As apparent from Table 2, the erosion rate of Comparative Example 4 which does not comprise titanium carbide is large. In contrast, from Examples 8 through 11, where the proportion of titanium carbide in the raw material composition having a particle size of 1 mm or less is 11 to 55%, the erosion rate is reduced with increasing titanium carbide content (the mixing proportion of titanium carbide in the raw material composition having a particle size of 1 mm or less), showing superior erosion resistance.

The graph shown in Figure 2 can be drawn from the results of Tables 1 and 2. Figure 2 is a graph showing the relationship between the proportion of titanium carbide in a mixture of carbon raw material and titanium carbide in the raw material composition having a particle size of 1 mm or less with the erosion rate. From Figure 2, it is apparent that the erosion rate decreases with the increase in the proportion of titanium carbide (%) in the mixture of carbon raw material and titanium carbide in the raw material composition having a particle size of 1 mm or less. In other words, the effect of reducing the erosion rate is sufficiently exerted when the proportion of titanium carbide is 5% or more, and it is obvious that an effect of reducing the erosion rate can similarly be further obtained when the proportion of titanium carbide is 55% or more. If the proportion of titanium carbide in the mixture of carbon raw material and titanium carbide having a particle size of 1 mm or less is less than 5% by mass, the wettability of the microstructure itself with aluminum melt will not be improved, and the effect of reducing the erosion rate therefore cannot be sufficiently exerted.

Consequently, by allowing the proportion of titanium carbide to be 5 to 100% in the raw material composition having a particle size of 1 mm or less, a cathode carbon block having reduced erosion rate and superior erosion resistance as well as a process for production thereof can be provided.

### [Comparison of third property (comparison of graphitization temperature)]

For comparison of the third property, process temperature in the graphitization step was varied to produce cathode carbon blocks as Examples 12 to 14, which are not according to the invention, and Comparative Examples 5 to 11, and the property of carbon blocks from different graphitization temperatures was compared. Calcined pitch coke was used as the carbon raw material used in this comparison of property.

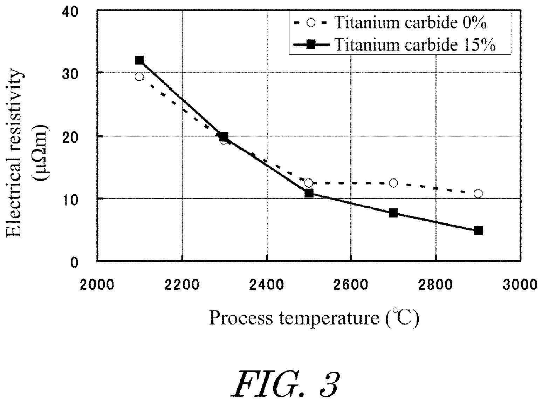

In Examples 12 to 14 and Comparative Examples 5 to 11, cathode carbon blocks having different titanium carbide contents were obtained with the production procedure described below. For the production procedure, coal-tar pitch at an amount of outer percentage of 18% relative to the total of the carbon raw material and titanium carbide was added as the organic binder according to the formulation shown in Table 3, kneaded, press molded at a molding pressure of 20 MPa to obtain a molded product of about 100ϕ × 130 mm. This molded product was further embedded in coke breeze, baked under a non-oxidative atmosphere at a temperature of 1000°C, and graphitized in an indirect current type graphitization furnace (Acheson furnace) at different temperatures. The result of the electrical resistivity measured for the cathode carbon block obtained is shown in Table 3. In addition, Figure 3 is a graph showing the relationship between the process temperature and the electrical resistivity when the titanium carbide content in the cathode carbon is 0% and 15%.

**[Table 3]**

| | | Example | | | Comparative Example | | | | | | |
|---|---|---|---|---|---|---|---|---|---|---|---|
| | | 12 | 13 | 14 | 5 | 6 | 7 | 8 | 9 | 10 | 11 |
| Carbon raw material (% by mass) | Greater than 1 mm | - | - | - | - | - | - | - | - | - | - |
| | 1 mm or less | 85 | 85 | 85 | 100 | 100 | 100 | 100 | 100 | 85 | 85 |
| TiC | 7 µm | 15 | 15 | 15 | - | - | - | - | - | 15 | 15 |
| (Raw material subtotal) | | 100 | 100 | 100 | 100 | 100 | 100 | 100 | 100 | 100 | 100 |
| Graphitization temperature (°C) | | 2500 | 2700 | 2900 | 2100 | 2300 | 2500 | 2700 | 2900 | 2100 | 2300 |
| Electric resistivity (µΩm) | | 11 | 8 | 5 | 29 | 19 | 14 | 12 | 11 | 32 | 20 |

From Table 3 and Figure 3, it can be seen that in Comparative Examples 5 to 9 without any titanium carbide added and Examples 12 to 14 having 15% by mass of titanium carbide added, the catalytic effect of titanium carbide is presented at a graphitization temperature of greater than 2400°C. Further, by comparing Examples 12 to 14 with Comparative Examples 7 to 9, it can be seen that when the graphitization temperature is greater than 2400°C, the reduction in electrical resistivity increases in comparison to no titanium carbide.

Consequently, it is seen that a graphitization temperature of cathode carbon block at 2400°C or higher enables the graphitization of calcined coke which is the raw material and reduces the electrical resistivity. Further, at a graphitization temperature greater than 3000°C, more than necessary caloric or electric energy will be added, and the aging of the graphitization furnace will proceed which may lead to increased cost. Accordingly, by adding titanium carbide and employing a graphitization temperature of 2400 to 3000°C, a cathode carbon block having low electrical and high thermal conductivity as well as a process for production thereof can be provided.

### EXPLANATION OF SYMBOLS

- 1: graphite crucible
- 2: electrolytic bath
- 3: cathode conductive rod
- 4: adapter
- 5: test strip
- 6: electrolysis tank outer wall
- 7: anode conductive rod

## Claims

1. A process for producing a cathode carbon block for aluminum smelting, wherein
- an organic binder is added to a mixture wherein
the proportion of particles of a carbon raw material of 64 to 97% by mass, said carbon raw material including calcined coke, graphite, or a mixture thereof,
and the proportion of particles of titanium carbide of 3 to 36% by mass, said particles of titanium carbide having an average particle size in the range of 1 µm to 50 µm,
wherein the particle size of the mixture is controlled such that there are:
- particles having a particle size of 1 mm or less, wherein the proportion of said titanium carbide particles in the particles having a particle size of 1 mm or less is 5 to 100%,
- and carbon raw material particles having a particle size greater than 1 mm
- the mixture added with the organic binder is kneaded, formed, baked in a non-oxidative atmosphere, and then graphitized to obtain a carbon block.

2. The process for producing a cathode carbon block for aluminum smelting according to claim 1, wherein the mixture comprises carbon raw material particles having a particle size of 1 mm or less.

3. The process for producing a cathode carbon block for aluminum smelting according to claim 1 or claim 2, wherein said graphitization temperature is 2400 to 3000°C.

4. A cathode carbon block for aluminum smelting obtained by a process according to any one of claims 1 to 3.

5. The cathode carbon block for aluminum smelting according to claim 4 wherein the rate of thermal conductivity is 115 W/(m·K) or higher.

6. The cathode carbon block for aluminum smelting according to any one of claims 4 and 5, wherein the value of electrical resistivity is 11 µΩm or less.

7. Use of a mixture as defined in claim 1 for producing a cathode carbon block for aluminum smelting.

## Patentansprüche

1. Ein Verfahren zur Herstellung eines Kathoden-Kohlenstoffblocks zum Verhütten von Aluminium, wobei
- ein organisches Bindemittel zu einer Mischung gegeben wird, worin der Anteil an Partikeln eines Kohlenstoff-Ausgangsmaterials von 64 bis 97 Masse-% ist, das genannte Kohlenstoff-Ausgangsmaterial kalzinierten Koks, Graphit oder eine Mischung davon enthält,
und der Anteil an Partikeln von Titankarbid 3 bis 36 Masse-% ist, die genannten der Partikeln von Titankarbid eine durchschnittliche Teilchengröße im Bereich von 1 µm bis 50 µm aufweisen,
wobei die Partikelgröße der Mischung so gesteuert wird, dass da vorliegen:
- Partikeln mit einer Partikelgröße von 1 mm oder weniger, wobei der Anteil der genannten Partikeln von Titankarbid in den Partikeln mit einer Partikelgröße von 1 mm oder weniger 5 bis 100 % beträgt,
- und Partikeln von Kohlenstoff-Ausgangsmaterial mit einer Partikelgröße von größer als 1 mm
- die Mischung mit dem zugesetzten organischen Bindemittel geknetet, geformt, in einer nicht-oxidativen Atmosphäre gebacken wird, und dann graphitisiert wird, um einen Kohlenstoffblock zu erhalten.

2. Das Verfahren zur Herstellung eines Kathoden-Kohlenstoffblocks zum Verhütten von Aluminium nach Anspruch 1, wobei die Mischung Partikeln von Kohlenstoff-Ausgangsmaterial umfasst, die eine Partikelgröße von 1 mm oder weniger aufweisen.

3. Das Verfahren zur Herstellung eines Kathoden-Kohlenstoffblocks zum Verhütten von Aluminium nach Anspruch 1 oder Anspruch 2, wobei die Temperatur der Graphitisierung 2400 bis 3000 °C beträgt.

4. Ein Kathoden-Kohlenstoffblock zum Verhütten von Aluminium, erhalten durch ein Verfahren nach einem der Ansprüche 1 bis 3.

5. Der Kathoden-Kohlenstoffblock zum Verhütten von Aluminium nach Anspruch 4, wobei die Geschwindigkeit der Wärmeleitfähigkeit 115 W/(m·K) oder höher ist.

6. Der Kathoden-Kohlenstoffblock zum Verhütten von Aluminium nach einem der Ansprüche 4 und 5, wobei der Wert des elektrischen Widerstandsgröße 11 µΩm oder weniger beträgt.

7. Verwendung einer Mischung wie in Anspruch 1 definiert zur Herstellung eines Kathoden-Kohlenstoffblocks zum Verhütten von Aluminium.

## Revendications

1. Procédé de production d'un bloc de carbone cathodique à des fins de fusion d'aluminium, dans lequel
- un liant organique est ajouté à un mélange dans lequel
la proportion de particules d'une matière première de carbone est de 64 à 97 % en masse, ladite matière première de carbone comprenant un coke calciné, un graphite, ou un mélange de ceux-ci,
et la proportion de particules de carbure de titane de 3 à 36 % en masse, lesdites particules de carbure de titane présentant une taille moyenne de particule située dans la plage allant de 1 µm à 50 µm,
dans lequel la taille de particule du mélange est contrôlée de façon qu'il y ait :
- des particules ayant une taille de particule de 1 mm ou moins, dans lequel la proportion desdites particules de carbure de titane dans les particules ayant une taille de particule de 1 mm ou moins est de 5 à 100 %,
- et des particules de matière première de carbone ayant une taille de particule supérieure à 1 mm
- le mélange auquel a été ajouté le liant organique est malaxé, mis en forme, cuit sous une atmosphère non oxydante, et ensuite graphitisé pour obtenir un bloc de carbone.

2. Procédé de production d'un bloc de carbone cathodique à des fins de fusion d'aluminium selon la revendication 1, dans lequel le mélange comprend des particules de matière première de carbone ayant une taille de particule de 1 mm ou moins.

3. Procédé de production d'un bloc de carbone cathodique à des fins de fusion d'aluminium selon la revendication 1 ou la revendication 2, dans lequel ladite température de graphitisation est de 2400 à 3000 °C.

4. Bloc de carbone cathodique à des fins de fusion d'aluminium obtenu par un procédé selon l'une quelconque des revendications 1 à 3.

5. Bloc de carbone cathodique à des fins de fusion d'aluminium selon la revendication 4, dans lequel le taux de conductivité thermique est de 115 W/(m·K) ou plus.

6. Bloc de carbone cathodique à des fins de fusion d'aluminium selon l'une quelconque des revendications 4 et 5, dans lequel la valeur de résistivité électrique est de 11 µΩm ou moins.

7. Utilisation d'un mélange tel que défini dans la revendication 1 pour produire un bloc de carbone cathodique à des fins de fusion d'aluminium.
